# EUROPÄISCHE PATENTANMELDUNG

(11) **EP 2 311 571 A2**
(43) Veröffentlichungstag der Anmeldung: **20.04.2011**
(21) Anmeldenummer: 10009366.5
(22) Anmeldetag: 09.09.2010
(51) Int. Cl.: B05B 1/24, F02M 31/18, F23Q 7/00

(54) **Elektrisch beheizbare Sprühdüse**

(30) Priorität: 15.10.2009 DE 102009050288
(71) Anmelder: BorgWarner BERU Systems GmbH, 71636 Ludwigsburg (DE)
(72) Erfinder: Brichzin, Volker, 71634 Ludwigsburg (DE); Wulff, Nicolaus, D-70499 Stuttgart (DE); Frassek, Lutz, 96472 Rödental (DE); Eller, Martin, 71642 Ludwigsburg (DE)
(74) Vertreter: Twelmeier Mommer & Partner

(57) **Zusammenfassung**

Beschrieben wird eine elektrisch beheizbare Sprühdüse mit einem Keramikstift, der einen Strömungskanal (2) mit wenigstens einer Öffnung (3) für ein zu versprühendes Fluid aufweist, wobei der Keramikstift einen keramischen Innenleiter (4) und einen keramischen Außenleiter (5) aufweist, zwischen denen ein keramischer Isolator (6) angeordnet ist.

## Beschreibung

Die Erfindung betrifft eine elektrisch beheizbare Sprühdüse. Derartige Sprühdüsen werden beispielsweise zum Verdampfen von Kraftstoff und Einsprühen in einen Brennraum verwendet. Solche Sprühdüsen werden manchmal auch als Verdampferkerzen bezeichnet und sind beispielsweise in der DE 37 16 411 C2 und der DE 35 16 410 A1 beschrieben. Elektrisch beheizbare Sprühdüsen werden in Kraftfahrzeugen insbesondere als Einspritzdüsen für Medien wie beispielsweise Kraftstoff, Harnstofflösung oder Wasser benötigt.

Aufgabe der vorliegenden Erfindung ist einen Weg aufzuzeigen, wie kostengünstig eine für den Einsatz in Kraftfahrzeugen geeignete Sprühdüse geschaffen werden kann.

Diese Aufgabe wir durch eine Sprühdüse mit den im Anspruch 1 angegebenen Merkmalen gelöst. Vorteilhafte Weiterbildungen der Erfindung sind Gegenstand der Unteransprüche.

Für eine erfindungsgemäße Sprühdüse wird ein Keramikstift verwendet, der einen keramischen Innenleiter und einen keramischen Außenleiter aufweist, zwischen denen ein keramischer Isolator angeordnet ist. In diesem Keramikstift verläuft ein Strömungskanal mit wenigstens einer Öffnung für ein zu versprühendes Fluid.

Ein solcher Keramikstift kann durch Koextrusion geeigneter Keramikwerkstoffe, beispielsweise auf Basis von Siliziumnitrid oder einem anderen elektrisch leitenden Keramikmaterial, hergestellt werden. Durch Beimischung eines elektrisch leitfähigen Keramikmaterials, beispielsweise Molybdän- oder Wolframsilizid, kann für den Innen- und den Außenleiter eine elektrische Leitfähigkeit eingestellt werden. In einem solchen Stift kann ein Strömungskanal als eine in Längsrichtung verlaufende Bohrung mit geringem Aufwand realisiert werden. Öffnungen können in beliebiger Anzahl durch Querbohrungen geschaffen werden. Die in Längsrichtung verlaufende Bohrung kann von einem Ende bis zum anderen Ende durchgehen, so dass der Stift an seiner Spitze eine Öffnung aufweist. Möglich ist es auch, dass die in Längsrichtung verlaufende Bohrung kurz vor der Spitze endet, so dass nur durch eine oder mehrere zusätzliche Bohrungen, insbesondere Querbohrungen, Öffnungen geschaffen werden. Die zusätzlichen Bohrungen haben bevorzugt einen kleineren Durchmesser als die in Längsrichtung verlaufende Bohrung zur Ausbildung des Strömungskanals.

Während herkömmliche Sprühdüsen mit mehr oder weniger großem Aufwand aus einer größeren Anzahl von Einzelteilen zusammengesetzt werden müssen, kann eine erfindungsgemäße Sprühdüse vorteilhaft einstückig und deshalb kostengünstig gefertigt werden. Vorteilhaft ist insbesondere auch, dass sich ein zylindrischer Keramikstift mit geringem Aufwand dicht an eine Flüssigkeitsleitung anschließen lässt.

Bevorzugt ist bei einer erfindungsgemäßen Sprühdüse ein Endabschnitt des Außenleiters als ein keramischer Heizleiter ausgebildet. Auf diese Weise kann die Heizenergie auf einen Endabschnitt des Keramikstifts konzentriert werden, in dem bevorzugt die Öffnung oder die Öffnungen angeordnet sind. Prinzipiell ist es aber auch möglich, den Keramikstift mit einem durch den Innenleiter und den Außenleiter fließenden Strom gleichmäßig auf seiner vollen Länge zu erwärmen. Um einen Endabschnitt des Außenleiters als einen keramischen Heizleiter auszubilden, kann bei einem extrudierten Grünkörper der Außenleiter in einem Endabschnitt des Stifts entfernt werden und anschließend dort ein Heizleitermaterial aufgebracht werden, beispielsweise durch Aufsprühen.

Eine vorteilhafte Weiterbildung der Erfindung sieht vor, dass der Strömungskanal und/oder die wenigstens eine Öffnung an ihren Innenflächen von einer Beschichtung bedeckt sind. Durch eine solche Beschichtung kann Ablagerungen von Flüssigkeitsrückständen entgegengewirkt werden. Dies ist insbesondere bei einer Verwendung der Sprühdüse als Kraftstoffverdampfer ein wichtiger Vorteil, da Kraftstoffverdampfer häufig durch Verkokung geschädigt werden. Eine Beschichtung kann vorteilhaft auch bei einer chemischen Unverträglichkeit zwischen der zu versprühenden Flüssigkeit und dem Material des Glühstifts verwendet werden. In Kraftfahrzeugen wird beispielsweise Harnstofflösung für Abgasreinigungskatalysatoren verwendet, die sehr korrosiv ist.

Bevorzugt enthält die Beschichtung Edelmetall. Vorteilhaft kann auf diese Weise ein Abbrand von Russ katalysiert werden. Als Beschichtung kann beispielsweise eine Schicht auf Basis von Siliziumoxid verwendet werden, die Seltene Erden enthält und mit Edelmetall dotiert ist. Als Beschichtung kann beispielsweise auch ein Metallfilm oder ein Silikonharz verwendet werden. Silikonharze können als Lack- oder Pulverbeschichtung aufgetragen werden und halten Temperaturen von mehreren 100°C stand. Insbesondere Silikonharzbeschichtungen auf Basis von Phenylsilikon haben eine sehr gute Temperaturbeständigkeit. Um die Sprühdüse vor Ablagerungen von Flüssigkeitsrückständen zu schützen ist eine Beschichtung insbesondere im Bereich der Öffnungen vorteilhaft, da dort die Temperatur der Flüssigkeit am höchsten ist. Bevorzugt ist bei einer erfindungsgemäßen Sprühdüse deshalb in der wenigstens einen Öffnung der Außenleiter von einer Beschichtung bedeckt. Zusätzlich kann auch die Außenseite des Glühstifts von einer solchen Beschichtung bedeckt sein.

Weitere Einzelheiten und Vorteile der Erfindung werden an Ausführungsbeispielen unter Bezugnahme auf die beigefügten Zeichnungen erläutert. Gleiche und einander entsprechende Komponenten sind dabei mit übereinstimmenden Bezugszahlen bezeichnet. Es zeigen:
- Figur 1: eine schematische Darstellung einer erfindungsgemäßen Sprühdüse;
- Figur 2: eine teilweise geschnittene Detailansicht des in Figur 1 gezeigten Ausfüh- rungsbeispiels;
- Figur 3: eine teilweise geschnittene Ansicht eines weiteren Ausführungsbeispiels; und
- Figur 4: eine teilweise geschnittene Detailansicht eines weiteren Ausführungsbei- spiels.

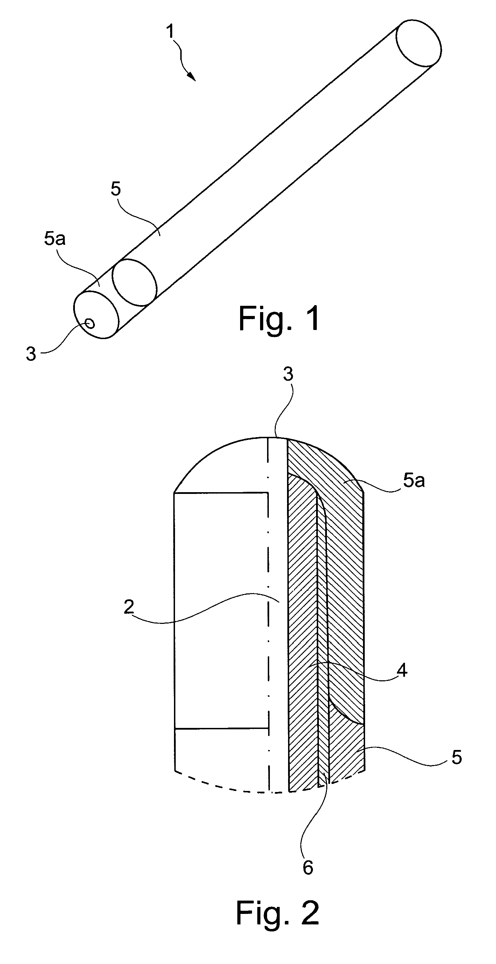

Die in Figur 1 dargestellte Sprühdüse 1 besteht aus einem Keramikstift, in dem ein Strömungskanal 2 verläuft und der eine Öffnung 3 für ein zu versprühendes Fluid aufweist. Figur 2 zeigt eine teilweise geschnittene Ansicht von dem die Öffnung 3 aufweisenden Ende des in Figur 1 dargestellten Ausführungsbeispiels.

Der Keramikstift hat einen keramischen Innenleiter 4 und einen keramischen Außenleiter 5, zwischen denen ein keramischer Isolator 6 angeordnet ist. Ein Endabschnitt des Außenleiters 5 an dem die Öffnung 3 aufweisenden Ende des Keramikstifts ist als ein keramischer Heizleiter 5a ausgebildet, der eine Stirnseite des Innenleiters 4 bedeckt. Die verschiedenen keramischen Leiter 4, 5, 5a können beispielsweise eine Keramik auf Basis von Molybdänsilizid und Siliziumnitrid sein, wobei durch den Molybdänsilizidanteil der elektrische Widerstand auf einen gewünschten Wert eingestellt werden kann. Für den Isolator 6 kann beispielsweise Siliziumnitrid verwendet werden.

Bei dem in den Figuren 1 und 2 dargestellten Ausführungsbeispielen verläuft der Strömungskanal 2 in Längsrichtung durchgehend von einem Ende des Keramikstifts bis zu seinem anderen Ende. Der Strömungskanal 2 ist dabei von dem Innenleiter 4 umgeben.

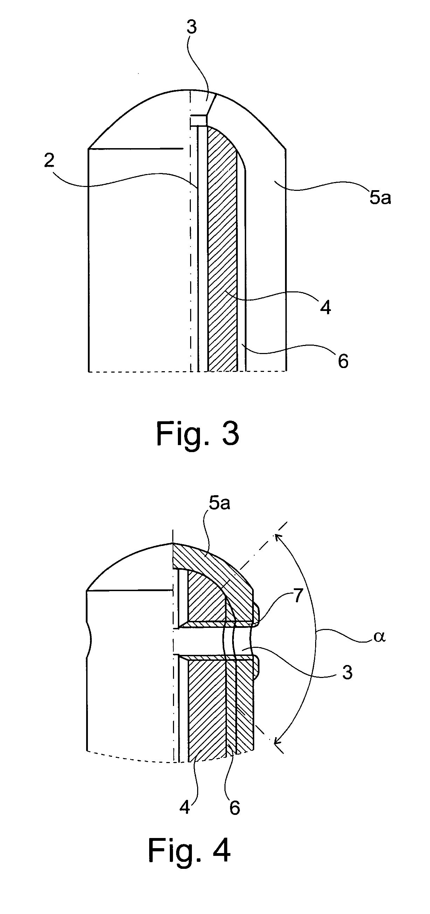

In Figur 3 ist ein weiteres Ausführungsbeispiel dargestellt, das sich von dem in Figur 2 dargestellten Ausführungsbeispiels nur durch die Geometrie der Öffnung 3 unterscheidet. Die Öffnung 3 des in Figur 3 dargestellten Ausführungsbeispiels weitet sich in Strömungsrichtung auf. Durch eine trichter- oder konusförmige Gestalt können versprühter Dampf oder Tröpfchen besonders fein in einem größeren Raumwinkel verteilt werden. Besonders vorteilhaft ist es, wenn sich die Austrittsöffnung 3 mit einem Winkel von 30° bis 45° aufweitet.

Figur 4 zeigt ein weiteres Ausführungsbeispiel, das sich von den vorstehend beschriebenen Ausführungsbeispielen dadurch unterscheidet, dass die Öffnungen 3 als Querbohrungen realisiert sind. Zur Ausbildung des Flüssigkeitstransportkanals erstreckt sich eine Längsbohrung von einem Ende des Keramikstifts bis in den von dem Heizleiter 5a umgebenen Bereich, ohne jedoch an diesem Ende auszutreten. Der in Figur 4 dargestellte Keramikstift hat mehrere Öffnungen 3, die in Umfangsrichtung in dem als Heizleiter 5a ausgebildeten Abschnitt des Außenleiters 5 angeordnet sind. Vorteilhaft kann auf diese Weise eine großräumige Verteilung von Versprühtem Dampf oder Tröpfchen erreicht werden.

Im Gegensatz zu den vorstehend beschriebenen Ausführungsbeispielen ist an der Stirnseite des Keramikstifts keine Öffnung vorgesehen. Bei Bedarf kann eine Öffnung 3 an der Stirnseite jedoch mit einer oder mehreren in Umfangsrichtung verteilten Öffnungen 3 kombiniert werden. Obwohl in Figur 4 alle Querbohrungen in einem Ring angeordnet sind, also in einer Ebene liegen, können Querbohrungen vorteilhaft auch in mehreren Ringen, also in Längsrichtung des Stifts verteilt, angeordnet werden.

Die Querbohrungen verlaufen bei dem in Figur 4 dargestellten Ausführungsbeispiel senkrecht zur Längsrichtung des Keramikstifts. Es ist aber auch möglich, dass die Querbohrungen mit der Längsrichtung des Keramikstifts einen anderen Winkel einschließen, der beispielsweise um bis zu 45° von dem rechten Winkel abweicht. Ein vorteilhafter Winkelbreich ist in Figur 4 mit dem Winkel α angedeutet.

Hat der Keramikstift an seiner Stirnseite eine Austrittsöffnung 3, wie dies in den Figuren 2 und 3 dargestellt ist, und zusätzlich eine oder mehrere Öffnungen in seiner Mantelfläche, kann im Betrieb durch diese seitlichen Öffnungen 3 Luft in den Transportkanal 2 eingesaugt werden. Dies ist insbesondere bei Verwendung der Sprühdüse als Kraftstoffeinspritzer vorteilhaft, da durch eine Vermischung von Luft und Kraftstoff bessere Zündbedingungen erreicht werden können. Ein Unterdruck in dem Flüssigkeitstransportkanal 2, der ein Einsaugen von Luft durch in den Mantelflächen vorgesehene Öffnungen 3 bewirken kann, lässt sich insbesondere durch eine geeignete Ausgestaltung der Austrittsöffnung 3 an der Stirnseite erzielen. Insbesondere eine sich erweiternde Austrittsöffnung an der Stirnseite kann einen Düseneffekt bewirken, der zu einem Unterdruck in dem Strömungskanal 2 führt.

Die Querbohrungen haben bevorzugt einen kleineren Durchmesser als der von dem Innenleiter 4 umgebene Abschnitt des Strömungskanals 2. Bei einer Verwendung als Einspritzdüse ist ein Durchmesser des Strömungskanals von nicht mehr als 2 mm, beispielsweise 0,7 bis 1,5 mm, besonders vorteilhaft. Die Querbohrungen können in einem solchen Fall beispielsweise 0,4 bis 0,7 mm Durchmesser haben.

Wenn die Sprühdüse 1 zum Verdampfen von Flüssigkeiten verwendet wird, beispielsweise als Kraftstoffverdampfer, besteht grundsätzlich die Gefahr, dass sich im Bereich der Öffnungen 3 Ablagerungen bilden. Insbesondere bei Kraftstoffverdampfung kann dies zu einer Verkokung führen. Die Gefahr von Ablagerungen besteht dabei insbesondere an zylinder- oder trichterförmigen Innenflächen des Heizleiters 5a, die eine Öffnung 3 begrenzen. Diesem Problem kann vorteilhaft begegnet werden, indem in der Öffnung 3 oder den Öffnungen 3 der Außenleiter 5 bzw. der Heizleiter 5a von einer katalytisch wirksamen Beschichtung 7 bedeckt ist, die den Abbrand von Russablagerungen katalytisch zu unterstützt. Edelmetalle, beispielsweise Platin, haben eine katalytische Wirkung und können deshalb den Abbrand von Russablagerungen unterstützen. Die Beschichtung 7 kann beispielsweise auf Basis von Siliziumoxid mit Zusatz von einem oder mehreren Elementen der Seltenen Erden hergestellt und mit Edelmetall dotiert sein.

Eine solche Beschichtung 7 kann beispielsweise durch Sprühen oder als Pulverbeschichtung aufgebracht und beim Sintern des Stifts eingebrannt werden. Die Beschichtung 7 kann zusätzlich zu Innenflächen des Heizleiters 5a in der Öffnung 3 auch einen die Öffnung 3 umgebenden Bereich des Heizleiters 5a oder sogar den gesamten Heizleiter 5a bedecken.

Vorteilhaft kann ferner die Innenfläche des Strömungskanals 2 mit einer Schicht bedeckt sein, die den Innenleiter 4 schützt. Eine solche Schicht kann bei der Koextrusion aus einem Material, beispielsweise einer Oxidkeramik, insbesondere auf Basis von Siliziumoxid, hergestellt werden, das einen Kern eines Grünkörpers bildet, oder später aufgetragen werden. Mittels einer Längsbohrung und Brennen kann ein Stift mit einem Strömungskanal 2 gebildet werden, bei dem der Innenleiter 4 mit einer Schutzschicht bedeckt ist.

### Bezugszahlen

- 1: Sprühdüse
- 2: Strömungskanal
- 3: Öffnung
- 4: Innenleiter
- 5: Außenleiter
- 5a: Heizleiter
- 6: Isolator
- 7: Schicht

## Patentansprüche

1. Elektrisch beheizbare Sprühdüse mit einem Keramikstift, der einen Strömungskanal (2) mit wenigstens einer Öffnung (3) für ein zu versprühendes Fluid aufweist, wobei der Keramikstift einen keramischen Innenleiter (4) und einen keramischen Außenleiter (5) aufweist, zwischen denen ein keramischer Isolator (6) angeordnet ist.

2. Sprühdüse nach Anspruch 1, **dadurch gekennzeichnet, dass** ein Endabschnitt des Außenleiters (5) als ein keramischer Heizleiter (5a) ausgebildet ist.

3. Sprühdüse nach Anspruch 2, **dadurch gekennzeichnet, dass** der Heizleiter (5a) an einem Ende des Keramikstifts eine Stirnseite des Innenleiters (4) bedeckt.

4. Sprühdüse nach Anspruch 2 oder3, **dadurch gekennzeichnet, dass** wenigstens eine Öffnung (3) durch den Heizleiter (5a) hindurch geführt ist.

5. Sprühdüse nach einem der vorstehenden Ansprüche, **dadurch gekennzeichnet, dass** wenigstens eine Öffnung (3) in einer Mantelfläche des Keramikstifts angeordnet ist.

6. Sprühdüse nach einem der vorstehenden Ansprüche, **dadurch gekennzeichnet, dass** sich der Strömungskanal (2) von einem Ende des Keramikstifts aus in dessen Längsrichtung erstreckt.

7. Sprühdüse nach einem der vorstehenden Ansprüche, **dadurch gekennzeichnet, dass** mehrere Öffnungen (3) für ein zu versprühendes Fluid vorgesehen sind.

8. Sprühdüse nach einem der vorstehenden Ansprüche, **dadurch gekennzeichnet, dass** der Strömungskanal (2) in dem Innenleiter (4) verläuft.

9. Sprühdüse nach einem der vorstehenden Ansprüche, **dadurch gekennzeichnet, dass** sich die wenigstens eine Öffnung (3) in Strömungsrichtung aufweitet.

10. Sprühdüse nach einem der vorstehenden Ansprüche, **dadurch gekennzeichnet, dass** in der wenigstens einen Öffnung (3) der Außenleiter (5) von einer Beschichtung (7), vorzugsweise einer katalytisch wirksamen Beschichtung, bedeckt ist.
